# FASCICULE DE BREVET EUROPEEN

(11) **EP 1 598 718 B1**
(45) Date de publication et mention de la délivrance du brevet: **31.05.2017**
(21) Numéro de dépôt: 05290768.0
(22) Date de dépôt: 07.04.2005
(51) Int. Cl.: G05D 1/00, G05D 1/06, G01C 21/00

(54) **Procédé et dispositif pour déterminer une altitude de sécurité pour un aéronef**
Verfahren und Einrichtung zur Bestimmung der Sicherheitshöhe für ein Luftfahrzeug
Method and device for determining a safety altitude for an aircraft

(30) Priorité: 18.05.2004 FR 0405385
(43) Date de publication de la demande: 23.11.2005
(73) Titulaire: AIRBUS OPERATIONS (SAS), 31060 Toulouse (FR)
(72) Inventeur: Artini, Franck, 31000 Toulouse (FR); Strongman, Edward, 31530 Bretx (FR)
(74) Mandataire: Gevers & Orès

(56) Documents cités:
- WO-A-00/31564
- FR-A- 2 741 320
- US-A- 5 638 282
- US-A- 6 088 654

## Description

La présente invention concerne un procédé et un dispositif pour déterminer une altitude de sécurité pour un aéronef, en particulier un avion de transport militaire.

Bien que non exclusivement, la présente invention s'applique plus particulièrement à un aéronef qui vole à basse altitude.

Lors d'un tel vol à basse -altitude, il peut se présenter des cas d'urgence (suite à une panne ou en raison d'un besoin opérationnel par exemple), pour lesquels l'aéronef doit être amené immédiatement à une altitude élevée, où il se trouve en sécurité et où il n'existe plus aucun risque de collision avec le terrain environnant. Le document US5638282 divulgue un procédé et un dispositif de l'art antérieur pour déterminer une altitude de sécurité pour un aéronef. La présente invention a pour objet un procédé permettant de déterminer une altitude de sécurité pour un aéronef, à laquelle ce dernier peut voler en toute sécurité sans aucun risque de collision avec le terrain environnant.

A cet effet, selon l'invention, ledit procédé est remarquable en ce que :
a) on détermine une surface de sécurité correspondant à une surface latérale définie dans le plan latéral de l'aéronef et liée au vol dudit aéronef ;
b) on détermine l'altitude la plus élevée du terrain qui est situé sous cette surface de sécurité ; et
c) on détermine l'altitude de sécurité comme la somme de ladite altitude la plus élevée déterminée à l'étape b) et d'une hauteur de garde, et en ce que l'on réalise de plus les opérations suivantes :
   - on détermine une surface de contrôle définie latéralement par ladite surface de sécurité et verticalement par ladite altitude de sécurité ; et
   - on vérifie que chaque point de ladite surface de contrôle est situé à au moins une hauteur correspondant à ladite hauteur de garde, au-dessus du terrain. De plus, avantageusement, à une étape d), on présente au moins ladite altitude de sécurité à un pilote de l'aéronef.

Ainsi, grâce à l'invention, on connaît l'altitude de sécurité à laquelle l'aéronef peut voler en toute sécurité, sans aucun risque de collision avec le terrain.

En outre, avantageusement, ladite hauteur de garde est une hauteur prédéterminée, qui est modifiable par un opérateur. De préférence, ladite hauteur de garde vaut environ sensiblement 1000 pieds (à peu près 300 mètres).

Dans un premier mode de réalisation appliqué à un aéronef qui vole (c'est-à-dire qui est guidé) le long d'une trajectoire de vol prédéterminée comprenant une trajectoire latérale munie de points de route, de façon avantageuse, ladite surface de sécurité est liée à ladite trajectoire latérale.

Dans ce cas, avantageusement :
- ladite surface de sécurité comporte au moins une surface rectangulaire qui est centrée latéralement par rapport à un segment rectiligne reliant deux points de route successifs et qui est définie au moins sur une partie dudit segment rectiligne. De préférence, ladite surface de sécurité comporte une pluralité de telles surfaces rectangulaires adjacentes ; et/ou
- ladite surface de sécurité comporte un cercle au niveau d'au moins un point de route.

Dans ce dernier cas, avantageusement :
- dans une première variante, ledit cercle est centré sur ledit point de route ; et
- dans une seconde variante, ledit cercle est centré sur un point de croisement de deux segments rectilignes successifs associés audit point de route, lorsque le vol audit point de route présente une obligation de survol de ce dernier.

Par ailleurs, dans un second mode de réalisation appliqué à un aéronef qui effectue un vol libre (c'est-à-dire qui n'est pas guidé automatiquement au moyen d'un pilote automatique ou d'un directeur de vol sur une trajectoire prédéterminée), en particulier un vol en conditions de vol à vue, de façon avantageuse, ladite surface de sécurité est liée à la position actuelle de l'aéronef.

Dans ce cas, avantageusement :
- dans une première variante, ladite surface de sécurité présente une longueur qui correspond à une durée de vol prédéterminée de l'aéronef à la vitesse actuelle ; et
- dans une seconde variante, ladite surface de sécurité présente une longueur qui dépend d'une échelle longitudinale d'un écran de visualisation de l'aéronef.

En outre, avantageusement, ladite surface de sécurité présente une largeur qui tient compte d'une incertitude concernant ladite position actuelle de l'aéronef.

Dans un mode de réalisation particulier, ladite surface de sécurité présente une forme conique, ce qui permet de privilégier les virages (manoeuvres latérales).

En outre, avantageusement, ladite surface de sécurité est modifiable par un opérateur, notamment en préparation de la mission (au sol).

En outre, avantageusement, on détermine un profil d'altitude de sécurité tenant compte de la variation éventuelle de l'altitude de sécurité au moins en aval de la position actuelle de l'aéronef, avec le délai approprié avant le changement d'altitude.

La présente invention concerne également un dispositif pour déterminer une altitude de sécurité pour un aéronef, en particulier un avion de transport militaire.

Selon l'invention, ledit dispositif est remarquable en ce qu'il comporte :
- des moyens pour déterminer une surface de sécurité correspondant à une surface latérale dépendant du vol de l'aéronef ;
- des moyens pour déterminer l'altitude la plus élevée du terrain qui est situé sous cette surface de sécurité ; et
- des moyens pour déterminer l'altitude de sécurité, en faisant la somme de ladite altitude la plus élevée et d'une hauteur de garde.

Dans un mode de réalisation particulier, ledit dispositif comporte, de plus :
- des moyens d'affichage pour présenter au moins ladite altitude de sécurité sur au moins un écran de visualisation ; et/ou
- des moyens pour contrôler ladite altitude de sécurité, à savoir en vol la hauteur de garde et au sol en préparation de mission les dimensions de la surface de sécurité.

Le dispositif conforme à l'invention apporte donc une aide précieuse au pilotage, en indiquant notamment l'altitude (de sécurité) à laquelle l'aéronef peut voler en toute sécurité.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

La figure 2 est un graphique en deux parties permettant de bien expliquer la présente invention dans le cas d'un vol le long d'une trajectoire de vol prédéterminée.

Les figures 3 à 5 sont des graphiques appliqués au cas de la figure 2.

La figure 6 est un graphique en deux parties permettant de bien expliquer la présente invention dans le cas d'un vol libre.

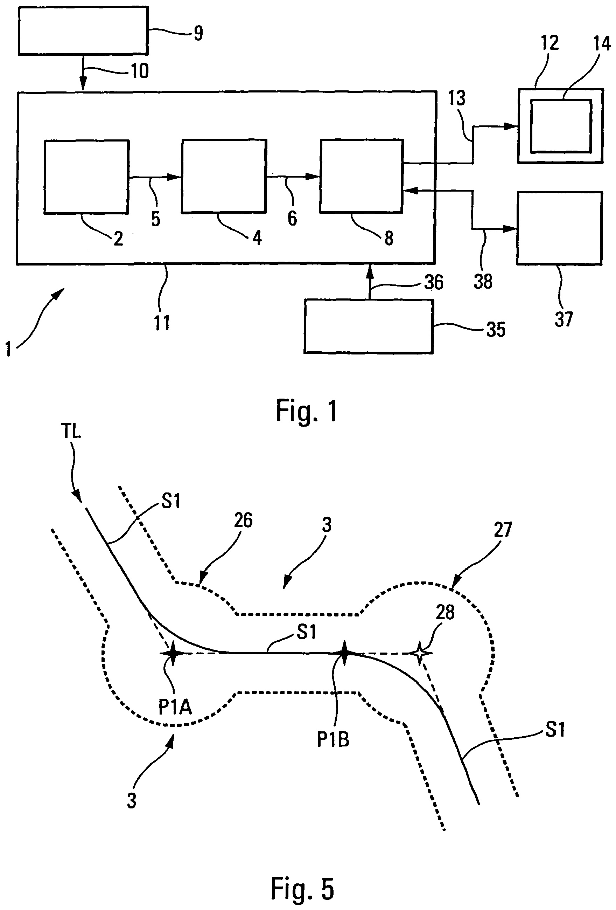

Le dispositif 1 conforme à l'invention et représenté schématiquement sur la figure 1 est un dispositif d'aide au pilotage d'un aéronef A, en particulier d'un avion de transport militaire. Ce dispositif 1 a notamment pour objet de déterminer une altitude de sécurité AS pour l'aéronef A.

Pour ce faire, ledit dispositif 1 comporte, selon l'invention :
- des moyens 2 pour déterminer une surface de sécurité 3 correspondant à une surface latérale (située dans un plan horizontal) dépendant du vol de l'aéronef A, comme précisé ci-dessous ;
- des moyens 4 qui sont reliés par une liaison 5 auxdits moyens 2 pour déterminer l'altitude AO la plus élevée de la partie 7A du terrain 7, qui est située sous cette surface de sécurité 3. Cette partie 7A du terrain 7 correspond à la projection verticale sur ledit terrain 7 de ladite surface de sécurité 3 ; et
- des moyens 8 qui sont reliés par une liaison 6 auxdits moyens 4, pour déterminer l'altitude de sécurité AS comme la somme de ladite altitude AO la plus élevée et d'une hauteur de garde HG.

Dans un mode de réalisation particulier, ledit dispositif 1 comporte de plus :
- un ensemble 9 de sources d'informations, précisé ci-dessous, qui est relié par une liaison 10 à une unité centrale 11 regroupant lesdits moyens 2, 4 et 8 ; et
- des moyens d'affichage 12 qui sont reliés par une liaison 13 auxdits moyens 8 et qui sont susceptibles de présenter au moins ladite altitude de sécurité AS sur au moins un écran de visualisation 14.

Ledit écran de visualisation 14 peut être un écran tête haute de type HUD ("Head Up Display" en anglais) ou un écran tête basse. Il peut également s'agir d'un affichage horizontal ou d'un affichage vertical (c'est-à-dire en coupe).

Ainsi, grâce au dispositif 1 conforme à l'invention, le pilote sait exactement à quelle altitude (altitude de sécurité AS) il doit mener l'aéronef A pour qu'il puisse voler en toute sécurité, notamment en cas d'urgence, par exemple suite à une panne ou en raison d'un besoin opérationnel. A cette altitude de sécurité AS, il n'existe en effet pour l'aéronef A plus aucun risque de collision avec le terrain environnant 7.

On notera que la hauteur de garde HG qui est par exemple fournie par l'ensemble 9 de sources d'informations, est de préférence une hauteur prédéterminée, par exemple d'environ 1000 pieds (à peu près 300 mètres). De plus, dans un mode de réalisation particulier, cette hauteur prédéterminée peut être modifiée par un opérateur, en particulier un pilote de l'aéronef A.

Bien que non exclusivement, la présente invention s'applique plus particulièrement à un vol à basse altitude d'un aéronef A, pour laquelle le risque de collision avec le terrain environnant 7 est bien entendu accru. Lors d'un tel vol à basse altitude, en cas de problèmes, il suffit au pilote d'amener l'aéronef A à ladite altitude de sécurité AS pour éviter toute collision avec le terrain 7, et ceci notamment en cas d'urgence.

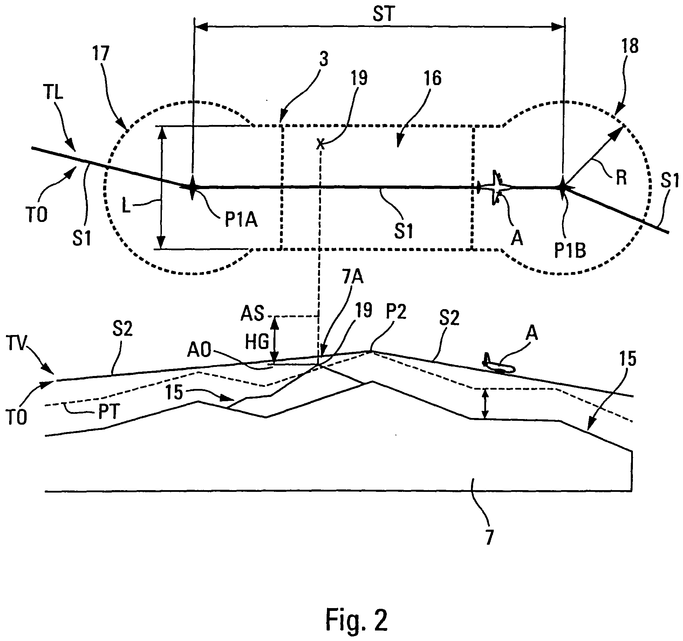

Dans un premier mode de réalisation représenté sur les figures 2 à 5, le dispositif 1 s'applique à un aéronef A qui vole le long d'une trajectoire de vol TO prédéterminée (planifiée en préparation de mission notamment) comprenant une trajectoire latérale TL munie de points de route P1A, P1 B, comme représenté sur la partie supérieure de la figure 2, et une trajectoire verticale TV représentée sur la partie inférieure de la figure 2.

Dans ce cas, dans une variante préférée, ladite trajectoire de vol TO est une trajectoire dite "à la ficelle", dont la trajectoire latérale TL située dans le plan latéral est constituée de segments rectilignes S1 qui relient les différents points de route P1 A, P1 B, et dont la trajectoire verticale TV située dans le plan vertical comporte des segments rectilignes S2 successifs se rejoignant à des points P2. On notera que la trajectoire de vol TO peut également comporter une trajectoire latérale TL telle que précitée et une trajectoire verticale TV qui représente une courbe continue. De préférence, les transitions latérale et verticale entre les différents segments rectilignes S1, S2 sont des arcs de cercle à rayon constant, qui sont issus de considération de vitesse de consigne et de facteurs de charge maximaux admissibles. Cette trajectoire de vol TO est une trajectoire anticipée, déterminée à l'aide de performances de montée et de descente prédites de l'aéronef A. De plus, elle est calculée à l'aide d'une base de données numérique du terrain ou d'un radar qui extrait le profil numérique et elle épouse, au mieux et au plus près, la configuration du relief 15 du terrain 7 à survoler, en étant par exemple située au-dessus d'un profil de terrain PT.

Dans le premier mode de réalisation représenté sur les figures 2 à 5, pour lequel l'aéronef A est guidé (notamment automatiquement) le long de ladite trajectoire de vol TO prédéterminée, ladite surface de sécurité 3 est liée à ladite trajectoire latérale TL de la trajectoire de vol TO, comme représenté par exemple sur la partie supérieure de la figure 2.

Dans l'exemple de la figure 2, la surface de sécurité 3 comporte, sur une section de trajectoire ST définie entre deux points de route P1 A et P1 B successifs, une pluralité de surfaces individuelles, à savoir :
- une surface rectangulaire 1 6 qui est centrée latéralement par rapport au segment rectiligne S1 reliant ces deux points de route successifs P1A et P1 B et qui présente une largeur L ; et
- deux cercles 17 et 18, de rayon R, qui sont prévus respectivement au niveau desdits points de route P1 A et P1 B et qui sont reliés à la surface rectangulaire 16. Ces cercles permettent de prévoir une marge supplémentaire dans les virages où le guidage de l'aéronef A peut être moins efficace (écarts latéraux).

Dans ce cas, dans une première variante simplifiée, la surface de sécurité 3 peut englober les différentes surfaces individuelles 16, 17 et 18 de sorte que l'on cherche alors l'altitude la plus élevée de tout le terrain 7 qui est situé sous cette surface de sécurité globale 3. En revanche, dans une seconde variante plus précise, on peut mettre en oeuvre l'invention pour chacune de ces surfaces individuelles 16, 17 et 18 qui deviennent alors chacune à tour de rôle une surface de sécurité, sous laquelle on détermine alors l'altitude la plus élevée du terrain 7.

Sur la figure 2, on a représenté la crête 19 la plus haute, d'altitude A0, qui est située sous la surface de sécurité individuelle 16. L'altitude de sécurité AS correspond donc à la somme de cette altitude AO et de la hauteur de garde HG.

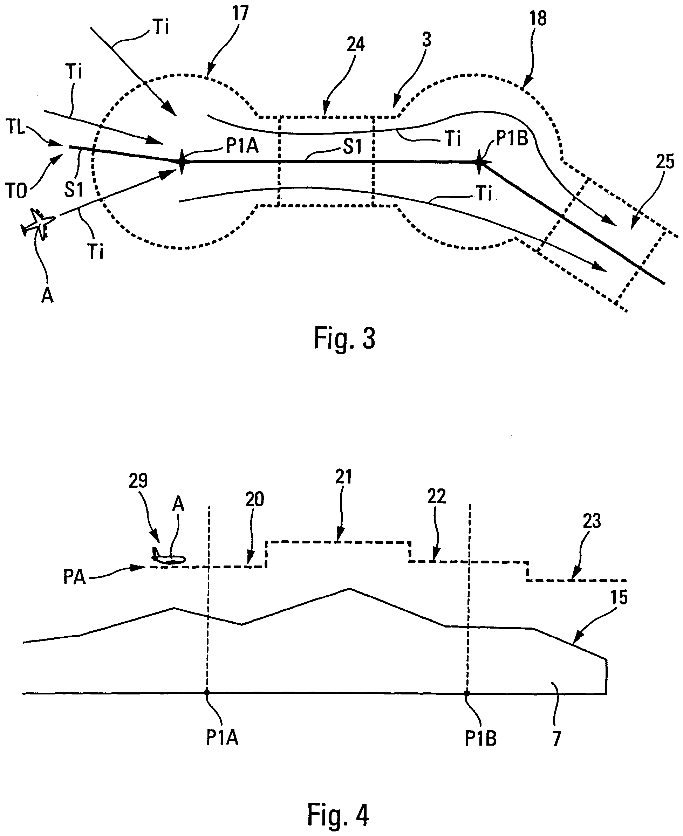

On notera que les cercles 17 et 18 permettent de sécuriser le vol de l'aéronef A au niveau desdits points de route P1 A et P1 B, dans le cas où la trajectoire effectivement suivie par l'aéronef A et illustrée par des tronçons de trajectoire Ti possibles sur la figure 3, s'écarte un peu de la trajectoire latérale TL planifiée. Ceci permet de sécuriser la rotation au niveau d'un point de route P1 A, P1 B, l'arrivée au premier point de route P1 A de la section ST et la sortie de la section ST au second point de route P1 B.

Dans un mode de réalisation particulier, les moyens 8 ne déterminent pas seulement une altitude de sécurité AS, mais également un profil d'altitude de sécurité PA qui tient compte de la variation éventuelle de l'altitude de sécurité AS au moins en aval de la position actuelle 29 de l'aéronef A, comme représenté sur la figure 4 qui correspond à l'exemple de la figure 3. La finesse du découpage de la figure 3 représente, de préférence, un compromis entre la fréquence des changements d'altitude de sécurité AS et l'efficacité (on notera que, si les surfaces de sécurité sont trop larges, l'aéronef A peut voler haut par rapport au point le plus haut, ce qui réduit l'efficacité opérationnelle, notamment en mission militaire).

Ledit profil d'altitude de sécurité PA comporte une pluralité de paliers 20, 21, 22 et 23 qui définissent une altitude de sécurité AS associée respectivement à des surfaces de sécurité successives représentées sur la figure 3, à savoir le cercle 17, un carré 24, le cercle 18 et un carré 25. Dans l'exemple de la figure 4, l'aéronef A se trouve juste au-dessus du palier 20 du profil d'altitude de sécurité PA.

On notera en outre qu'il est connu qu'à chaque point de route P1 A, P1 B peut être associée une condition relative au survol de ce point de route P1 A, P1 B, qui peut correspondre :
- soit à une obligation d'anticipation du survol, comme représenté pour le point de route P1 A sur la figure 5 ;
- soit à une obligation de survol de ce point de route, comme représenté pour le point de route P1 B sur la figure 5.

Dans ce cas, de préférence, la surface de sécurité 3 est telle que :
- pour le point de route P1 A, le cercle 26 correspondant est centré sur ce point de route P1 A ;
- pour le point de route P1 B, le cercle 27 correspondant est centré sur un point de croisement 28 des deux segments rectilignes successifs S1 qui sont associés audit point de route P1 B, ce qui permet de bien protéger le trajet effectif de l'aéronef A.

On notera que l'altitude de sécurité AS ne fournit pas seulement à l'équipage une altitude sûre, mais elle lui permet également d'anticiper le profil d'altitude de sécurité PA le long de la trajectoire de vol TO.

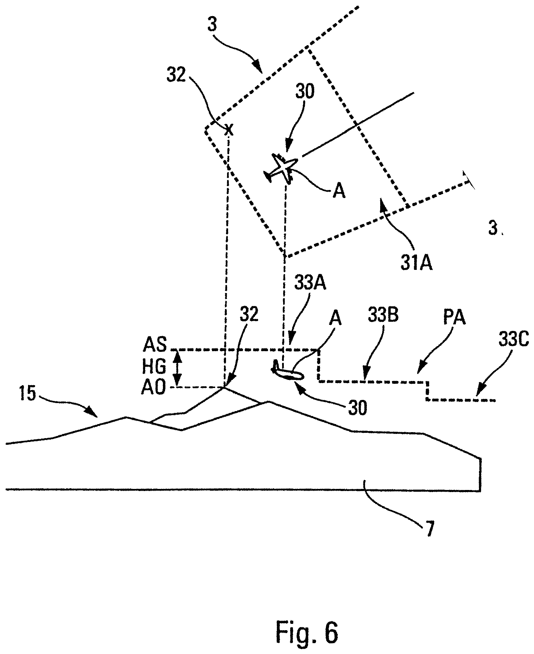

Par ailleurs, dans un second mode de réalisation, pour lequel aucun mode de guidage automatique de l'aéronef A n'est engagé, c'est-à-dire pour lequel l'aéronef A réalise un vol libre, sans système de pilotage automatique ou sans directeur de vol, notamment en conditions VMC ("Visual Meteorological Conditions" en anglais), c'est-à-dire en conditions météorologiques de vol à vue, la surface de sécurité 3 est liée à la position actuelle 30 de l'aéronef, comme représenté sur la figure 6.

Dans ce cas, la surface de sécurité 3 présente par exemple une forme conique ou une forme trapézoïdale (notamment pour anticiper les virages), comme représenté sur la partie supérieure de la figure 6 relative au plan latéral. Sur cette figure 6, la surface de sécurité 3 comporte trois surfaces individuelles 31 A, 31 B et 31C adjacentes dans le sens de vol. L'altitude A0 la plus élevée sous la surface 31 A correspond à une crête 32.

Ainsi, prises individuellement, les différentes surfaces de sécurité 31 A, 31B et 31C permettent de créer un profil d'altitude de sécurité PA comprenant des paliers 33A, 33B et 33C associés respectivement auxdites surfaces de sécurité 31 A, 31 B et 31C individuelles. Ces surfaces de sécurité sont donc définies autour de la position de l'aéronef A.

Dans l'exemple de la figure 6, la trajectoire de vol (illustrée par une flèche à l'avant de l'aéronef A) est une trajectoire rectiligne de longueur forfaitaire ou correspondant à un certain temps de vol à la vitesse actuelle de l'aéronef A, et qui est liée à l'axe dudit aéronef A (et se déplace donc avec ce dernier).

Dans un mode de réalisation préféré, ladite surface de sécurité 3 présente une largeur qui tient compte d'une incertitude concernant la position actuelle 30 de l'aéronef A. De plus, ladite surface de sécurité 3 présente une longueur :
- qui correspond à une durée de vol prédéterminée de l'aéronef A à la vitesse actuelle ; ou
- qui dépend d'une échelle longitudinale d'un écran de visualisation de l'aéronef A, en particulier de l'écran 14.

Par ailleurs, le dispositif 1 conforme à l'invention comporte de plus, comme représenté sur la figure 1 :
- des moyens 35 qui sont reliés par une liaison 36 à l'unité centrale 11, et qui permettent à un opérateur, en particulier un pilote de l'aéronef A, d'agir sur le procédé mis en oeuvre par l'unité centrale 11, notamment pour modifier ladite surface de sécurité 3 ; et
- des moyens 37 qui sont reliés par une liaison 38 à ladite unité centrale 1 et qui permettent de contrôler ladite altitude de sécurité AS.

Pour ce faire, lesdits moyens 37 :
- déterminent une surface de contrôle (non représentée) qui est définie latéralement par ladite surface de sécurité 3 et verticalement par ladite altitude de sécurité AS ; puis
- vérifient que chaque point ou zone individuelle (présentant une certaine surface) de ladite surface de contrôle est situé à au moins une hauteur prédéterminée (correspondant à ladite hauteur de garde HG) au-dessus du terrain 7.

Dans un mode de réalisation particulier, ledit ensemble 9 de sources d'informations fournit à l'unité centrale 11, au moins certaines des informations suivantes :
- la trajectoire de vol TO, dans le mode de réalisation des figures 2 à 5 ;
- un ensemble de données permettant de déterminer la surface de sécurité 3 liée à cette trajectoire de vol TO ;
- le vecteur d'état de l'aéronef A, permettant notamment de définir sa position actuelle 29, 30 ; et
- un ensemble de données permettant de définir la surface de sécurité 3 liée à la position actuelle 30 de l'aéronef A, dans le mode de réalisation de la figure 6.

## Revendications

1. Procédé pour déterminer une altitude de sécurité (AS) pour un aéronef (A), procédé selon lequel :
a) on détermine une surface de sécurité (3) correspondant à une surface latérale définie dans le plan latéral de l'aéronef (A) et liée au vol dudit aéronef (A) ;
b) on détermine l'altitude (AO) la plus élevée du terrain qui est situé sous cette surface de sécurité (3) ; et
c) on détermine l'altitude de sécurité (AS) comme la somme de ladite altitude (AO) la plus élevée déterminée à l'étape b) et d'une hauteur de garde (HG),
**caractérisé en ce que** l'on réalise de plus les opérations suivantes :
- on détermine une surface de contrôle définie latéralement par ladite surface de sécurité (3) et verticalement par ladite altitude de sécurité (AS) ; et
- on vérifie que chaque point de ladite surface de contrôle est situé à au moins une hauteur correspondant à ladite hauteur de garde (HG), au-dessus du terrain (7).

2. Procédé selon la revendication 1,
**caractérisé en ce que**, de plus, à une étape d), on présente au moins ladite altitude de sécurité (AS) à un pilote de l'aéronef (A).

3. Procédé selon l'une des revendications 1 et 2,
**caractérisé en ce que** ladite hauteur de garde (HG) est une hauteur prédéterminée, qui est modifiable par un opérateur.

4. Procédé selon l'une quelconque des revendications 1 à 3, **caractérisé en ce que** ladite hauteur de garde (HG) vaut environ 300 mètres.

5. Procédé selon l'une quelconque des revendications 1 à 4, pour un aéronef qui vole le long d'une trajectoire de vol (TO) prédéterminée comprenant une trajectoire latérale (TL) munie de points de route (P1 A, P1B),
**caractérisé en ce que** ladite surface de sécurité (3) est liée à ladite trajectoire latérale (TL).

6. Procédé selon la revendication 5,
**caractérisé en ce que** ladite surface de sécurité (3) comporte au moins une surface rectangulaire (16, 24, 25) qui est centrée latéralement par rapport à un segment rectiligne (S1) reliant deux points de route successifs (P1 A, P1 B) et qui est définie au moins sur une partie dudit segment rectiligne (S1).

7. Procédé selon la revendication 6,
**caractérisé en ce que** ladite surface de sécurité (3) comporte une pluralité de surfaces rectangulaires adjacentes.

8. Procédé selon l'une quelconque des revendications 5 à 7,
**caractérisé en ce que** ladite surface de sécurité (3) comporte un cercle (17, 18, 26, 27) au niveau d'au moins un point de route (P1 A, P1 B).

9. Procédé selon la revendication 8,
**caractérisé en ce que** ledit cercle (17, 18, 26) est centré sur ledit point de route (P1 A, P1 B).

10. Procédé selon la revendication 8,
**caractérisé en ce que** ledit cercle (27) est centré sur un point de croisement (28) de deux segments rectilignes successifs (S1) associés audit point de route (P1 B), lorsque le vol audit point de route (P1 B) présente une obligation de survol de ce dernier.

11. Procédé selon l'une des revendications 1 à 4, pour un aéronef (A) qui effectue un vol libre,
**caractérisé en ce que** ladite surface de sécurité (3) est liée à la position actuelle (30) de l'aéronef (A).

12. Procédé selon la revendication 11,
**caractérisé en ce que** ladite surface de sécurité (3) présente une longueur qui correspond à une durée de vol prédéterminée de l'aéronef (A) à la vitesse actuelle.

13. Procédé selon la revendication 11,
**caractérisé en ce que** ladite surface de sécurité (3) présente une longueur qui dépend d'une échelle longitudinale d'un écran de visualisation (14) de l'aéronef (A).

14. Procédé selon l'une des revendications 11 à 13,
**caractérisé en ce que** ladite surface de sécurité (3) présente une largeur qui tient compte d'une incertitude concernant ladite position actuelle (30) de l'aéronef (A).

15. Procédé selon l'une des revendications 11 à 14,
**caractérisé en ce que** ladite surface de sécurité présente une forme conique.

16. Procédé selon l'une quelconque des revendications précédentes,
**caractérisé en ce que** ladite surface de sécurité (3) est modifiable par un opérateur.

17. Procédé selon l'une quelconque des revendications précédentes,
**caractérisé en ce que** l'on détermine un profil d'altitude de sécurité (PA) tenant compte de la variation éventuelle de l'altitude de sécurité (AS) au moins en aval de la position actuelle (29, 30) de l'aéronef (A).

18. Dispositif pour déterminer une altitude de sécurité pour un aéronef, ledit dispositif comportant :
- des moyens (2) pour déterminer une surface de sécurité (3) correspondant à une surface latérale dépendant du vol de l'aéronef (A) ;
- des moyens (4) pour déterminer l'altitude (AO) la plus élevée du terrain (7) qui est situé sous cette surface de sécurité (3) ; et
- des moyens (8) pour déterminer l'altitude de sécurité (AS), en faisant la somme de ladite altitude (AO) la plus élevée et d'une hauteur de garde (HG),
**caractérisé en ce qu'**il comporte, de plus, pour contrôler ladite altitude de sécurité (AS), des moyens (37) qui déterminent une surface de contrôle définie latéralement par ladite surface de sécurité (3) et verticalement par ladite altitude de sécurité (AS) et qui vérifient que chaque point de ladite surface de contrôle est situé à au moins une hauteur correspondant à ladite hauteur de garde (HG), au-dessus du terrain (7).

19. Dispositif selon la revendication 18,
**caractérisé en ce qu'**il comporte, de plus, des moyens d'affichage (12) pour présenter au moins ladite altitude de sécurité (AS) sur au moins un écran de visualisation (14).

20. Aéronef,
**caractérisé en ce qu'**il comporte un dispositif (1) tel que celui spécifié sous l'une quelconque des revendications 18 et 19.

## Patentansprüche

1. Verfahren zum Bestimmen einer Sicherheitshöhe (AS) für ein Luftfahrzeug (A), wobei man bei dem Verfahren:
a) eine Sicherheitsfläche (3) bestimmt, die einer Seitenfläche entspricht, die auf der Seitenebene des Luftfahrzeugs (A) definiert wird und mit dem Flug des Luftfahrzeugs (A) verknüpft ist;
b) die höchste Höhe (AO) des Geländes bestimmt, das sich unter dieser Sicherheitsfläche (3) befindet; und
c) die Sicherheitshöhe (AS) als Summe aus der höchsten Höhe (AO), die im Schritt b) bestimmt wird, und einer Bodenfreiheit (HG) bestimmt,
**dadurch gekennzeichnet, dass** man darüber hinaus die folgenden Vorgänge durchführt:
- man bestimmt eine Steuerfläche, die seitlich durch die Sicherheitsfläche (3), und vertikal durch die Sicherheitshöhe (AS) definiert wird; und
- man überprüft, ob sich jeder Punkt der Steuerfläche auf zumindest einer Höhe befindet, die der Bodenfreiheit (HG) über dem Gelände (7) entspricht.

2. Verfahren nach Anspruch 1,
**dadurch gekennzeichnet, dass** man darüber hinaus in einem Schritt d) zumindest die Sicherheitshöhe (AS) einem Piloten des Luftfahrzeugs (A) präsentiert.

3. Verfahren nach einem der Ansprüche 1 und 2,
**dadurch gekennzeichnet, dass** die Bodenfreiheit (HG) eine vorbestimmte Höhe ist, die durch einen Betreiber geändert werden kann.

4. Verfahren nach einem der Ansprüche 1 bis 3,
**dadurch gekennzeichnet, dass** die Bodenfreiheit (HG) etwa 300 Meter beträgt.

5. Verfahren nach einem der Ansprüche 1 bis 4, für ein Luftfahrzeug, das entlang einer vorbestimmten Flugbahn (TO) fliegt, die eine Seitenbahn (TL) umfasst, die mit Routenpunkten (P1A, P1B) versehen ist,
**dadurch gekennzeichnet, dass** die Sicherheitsfläche (3) mit der Seitenbahn (TL) verknüpft ist.

6. Verfahren nach Anspruch 5,
**dadurch gekennzeichnet, dass** die Sicherheitsfläche (3) zumindest eine rechteckige Fläche (16, 24, 25) umfasst, die im Verhältnis zu einem geradlinigen Segment (S1), das zwei aufeinander folgende Routenpunkte (P1A, P1B) miteinander verbindet, seitlich zentriert ist, und die zumindest auf einem Teil des geradlinigen Segments (S1) definiert ist.

7. Verfahren nach Anspruch 6,
**dadurch gekennzeichnet, dass** die Sicherheitsfläche (3) eine Vielzahl von angrenzenden rechteckigen Flächen umfasst.

8. Verfahren nach einem der Ansprüche 5 bis 7,
**dadurch gekennzeichnet, dass** die Sicherheitsfläche (3) einen Kreis (17, 8, 26, 27) im Bereich von zumindest einem Routenpunkt (P1A, P1B) umfasst.

9. Verfahren nach Anspruch 8,
**dadurch gekennzeichnet, dass** der Kreis (17, 18, 26) auf dem Routenpunkt (P1A, P1B) zentriert ist.

10. Verfahren nach Anspruch 8,
**dadurch gekennzeichnet, dass** der Kreis (27) auf einem Kreuzungspunkt (28) von zwei aufeinanderfolgenden geradlinigen Segmenten (S1) zentriert ist, die dem Routenpunkt (P1B) zugeordnet sind, wenn der Flug zum Routenpunkt (P1B) eine Obligation zum Überfliegen von letzterem aufweist.

11. Verfahren nach einem der Ansprüche 1 bis 4, für ein Luftfahrzeug (A), das einen Freiflug durchführt,
**dadurch gekennzeichnet, dass** die Sicherheitsfläche (3) mit der aktuellen Position (30) des Luftfahrzeugs (A) verknüpft ist.

12. Verfahren nach Anspruch 11,
**dadurch gekennzeichnet, dass** die Sicherheitsfläche (3) eine Länge aufweist, die einer vorbestimmten Flugdauer des Luftfahrzeugs (A) mit der aktuellen Geschwindigkeit entspricht.

13. Verfahren nach Anspruch 11,
**dadurch gekennzeichnet, dass** die Sicherheitsfläche (3) eine Länge aufweist, die von einer Längsskala eines Anzeigebildschirms (14) des Luftfahrzeugs (A) abhängig ist.

14. Verfahren nach einem der Ansprüche 11 bis 13,
**dadurch gekennzeichnet, dass** die Sicherheitsfläche (3) eine Breite aufweist, die eine Ungewissheit hinsichtlich der aktuellen Position (30) des Luftfahrzeugs (A) berücksichtigt.

15. Verfahren nach einem der Ansprüche 11 bis 14,
**dadurch gekennzeichnet, dass** die Sicherheitsfläche eine konische Form aufweist.

16. Verfahren nach einem der vorhergehenden Ansprüche,
**dadurch gekennzeichnet, dass** die Sicherheitsfläche (3) durch einen Betreiber geändert werden kann.

17. Verfahren nach einem der vorhergehenden Ansprüche,
**dadurch gekennzeichnet, dass** man ein Sicherheitshöhenprofil (PA) bestimmt, das die eventuelle Variation der Sicherheitshöhe (AS) zumindest nach der aktuellen Position (29, 30) des Luftfahrzeugs (A) berücksichtig.

18. Vorrichtung zum Bestimmen einer Sicherheitshöhe für ein Luftfahrzeug, wobei die Vorrichtung Folgendes umfasst:
- Mittel (2) zum Bestimmen einer Sicherheitsfläche (3), die einer Seitenfläche in Abhängigkeit vom Flug des Luftfahrzeugs (A) entspricht;
- Mittel (4) zum Bestimmen der höchsten Höhe (AO) des Geländes (7), das sich unter dieser Sicherheitsfläche (3) befindet; und
- Mittel (8) zum Bestimmen der Sicherheitshöhe (AS) durch Bilden der Summe aus der höchsten Höhe (AO), und einer Bodenfreiheit (HG),
**dadurch gekennzeichnet, dass** sie darüber hinaus zum Steuern der Sicherheitshöhe (AS) Mittel (37) umfasst, die eine Steuerfläche bestimmen, die seitlich durch die Sicherheitsfläche (3), und vertikal durch die Sicherheitshöhe (AS) bestimmt wird, und die überprüfen, ob sich jeder Punkt der Steuerfläche auf zumindest einer Höhe befindet, die der Bodenfreiheit (HG) oberhalb des Geländes (7) entspricht.

19. Vorrichtung nach Anspruch 18,
**dadurch gekennzeichnet, dass** sie darüber hinaus Anzeigemittel (12) umfasst, um zumindest die Sicherheitshöhe (AS) auf zumindest einem Anzeigebüdschirm (14) zu präsentieren.

20. Luftfahrzeug,
**dadurch gekennzeichnet, dass** es eine Vorrichtung (1) umfasst, wie sie in einem der Ansprüche 18 und 19 spezifiziert wird.

## Claims

1. A method for determining a safe altitude (AS) for an aircraft (A), wherein:
a) a clear zone (3) is defined, corresponding to a lateral area defined in the lateral plane of the aircraft (A) and linked to the flight of said aircraft (A);
b) the highest altitude (AO) of the ground that is located under this clear zone (3) is determined; and
c) the safe altitude (AS) is determined as the sum of said highest altitude (AO) determined in step b) and a guard height (HG),
**characterized in that** the following operations are carried out:
- a control area is determined, defined laterally by said clear zone (3) and vertically by said safe altitude (AS); and
- each point of said control area is checked to ensure that it is located at at least a height corresponding to said guard height (HG), above the ground (7).

2. The method as claimed in claim 1,
**characterized in that**, furthermore, in step d), at least said safe altitude (AS) is presented to a pilot of the aircraft (A).

3. The method as claimed in one of claims 1 and 2,
**characterized in that** said guard height (HG) is a predetermined height, which can be modified by an operator.

4. The method as claimed in any one of claims 1 to 3,
**characterized in that** said guard height (HG) is around 300 meters.

5. The method as claimed in any one of claims 1 to 4, for an aircraft flying along a predetermined flight path (TO) comprising a lateral path (TL) provided with waypoints (P1A, P1B),
**characterized in that** said clear zone (3) is linked to said lateral path (TL).

6. The method as claimed in claim 5,
**characterized in that** said clear zone (3) has at least one rectangular area (16, 24, 25) which is centered laterally relative to a straight-line segment (S1) linking two successive waypoints (P1A, P1B) and which is defined at least over a part of said straight-line segment (S1).

7. The method as claimed in claim 6,
**characterized in that** said clear zone (3) has a plurality of adjacent rectangular areas.

8. The method as claimed in any one of claims 5 to 7, **characterized in that** said clear zone (3) includes a circle (17, 18, 26, 27) at at least one waypoint (P1A, P1B).

9. The method as claimed in claim 8,
**characterized in that** said circle (17, 18, 26) is centered on said waypoint (P1A, P1B).

10. The method as claimed in claim 8,
**characterized in that** said circle (27) is centered on a point of intersection (28) of two successive straight-line segments (S1) associated with said waypoint (P1B), when the flight at said waypoint (P1B) presents an obligation to fly over the latter.

11. The method as claimed in any one of claims 1 to 4, for an aircraft (A) which is in free flight, **characterized in that** said clear zone (3) is linked to the current position (30) of the aircraft (A).

12. The method as claimed in claim 11,
**characterized in that** said clear zone (3) presents a length which corresponds to a predetermined flight time of the aircraft (A) at the current speed.

13. The method as claimed in claim 11,
**characterized in that** said clear zone (3) presents a length which depends on a longitudinal scale of a display screen (14) on the aircraft (A).

14. The method as claimed in one of claims 11 to 13,
**characterized in that** said clear zone (3) presents a width which takes into account an uncertainty concerning said current position (30) of the aircraft (A).

15. The method as claimed in one of claims 11 to 14,
**characterized in that** said clear zone presents a conical shape.

16. The method as claimed in any one of the preceding claims 15,
**characterized in that** said clear zone (3) can be modified by an operator.

17. The method as claimed in any one of the preceding claims,
**characterized in that** a safe altitude profile (PA) is determined, taking into account any variation of the safe altitude (AS) at least forward of the current position (29, 30) of the aircraft (A).

18. A device for determining a safe altitude for an aircraft, said device comprising:
- means (2) for determining a clear zone (3) corresponding to a lateral area dependent on the flight of the aircraft (A);
- means (4) for determining the highest altitude (AO) of the ground (7) that is located under this clear zone (3); and
- means (8) for determining the safe altitude (AS), by calculating the sum of said highest altitude (AO) and a guard height (HG),
**characterized in that** it also includes, to control said safe altitude (AS), means (37) which determine a control area defined laterally by said clear zone (3) and vertically by said safe altitude (AS) and which check that each point of said control area is located at at least a height corresponding to said guard height (HG), above the ground (7).

19. The device as claimed in claim 18,
**characterized in that** it also includes display means (12) for presenting at least said safe altitude (AS) on at least one display screen (14).

20. An aircraft,
**characterized in that** it includes a device (1) such as the one specified in any one of claims 18 and 19.
